# EUROPÄISCHE PATENTSCHRIFT

(11) **EP 1 502 332 B1**
(45) Veröffentlichungstag und Bekanntmachung des Hinweises auf die Patenterteilung: **08.03.2006**
(21) Anmeldenummer: 03749840.9
(22) Anmeldetag: 07.05.2003
(51) Int. Cl.: H01S 3/06, H01S 3/0941, G02F 1/365

(54) **OPTISCHE ANORDNUNG ZUR ERZEUGUNG EINES BREITBANDSPEKTRUMS**
OPTICAL ARRANGEMENT FOR GENERATING A BROADBAND SPECTRUM
ENSEMBLE OPTIQUE POUR GENERER UN SPECTRE A LARGE BANDE

(30) Priorität: 08.05.2002 DE 10221365
(43) Veröffentlichungstag der Anmeldung: 02.02.2005
(73) Patentinhaber: JENOPTIK Laser, Optik, Systeme GmbH, 07745 Jena (DE)
(72) Erfinder: BRAUN, Bernd, 07749 Jena (DE); HOLLEMANN, Günter, 07749 Jena (DE)
(74) Vertreter: Bertram, Helmut
(86) Internationale Anmeldenummer: PCT/DE2003/001482
(87) Internationale Veröffentlichungsnummer: WO 2003/096490

(56) Entgegenhaltungen:
- EP-A- 1 306 940
- US-A- 5 103 457
- US-A- 5 561 547
- US-A- 5 825 551
- COEN S ET AL: "Supercontinuum generation by stimulated Raman scattering and parametric four-wave mixing in photonic crystal fibers" JOURNAL OF THE OPTICAL SOCIETY OF AMERICA B (OPTICAL PHYSICS), APRIL 2002, OPT. SOC. AMERICA, USA, Bd. 19, Nr. 4, Seiten 753-764, XP002255591 ISSN: 0740-3224
- KELLER U ET AL: "SEMICONDUCTOR SATURABLE ABSORBER MIRRORS(SESAM'S) FOR FEMTOSECOND TO NANOSECOND PULSE GENERATION IN SOLID-STATE LASERS" IEEE JOURNAL OF SELECTED TOPICS IN QUANTUM ELECTRONICS, IEEE SERVICE CENTER, US, Bd. 2, Nr. 3, 1. September 1996 (1996-09-01), Seiten 435-451, XP000689812 ISSN: 1077-260X
- WEINGARTEN K J: "PASSIVELY MODE-LOCKED DIODE-PUMPED SOLID-STATE LASERS THAT USE AN ANTIRESONANT FABRY-PEROT SATURABLE ABSORBER" OPTICS LETTERS, OPTICAL SOCIETY OF AMERICA, WASHINGTON, US, Bd. 18, Nr. 8, 15. April 1993 (1993-04-15), Seiten 640-642, XP000364214 ISSN: 0146-9592
- SEEFELDT M ET AL: "Compact white-light source with an average output power of 2.4 W and 900 nm spectral bandwidth" OPTICS COMMUNICATIONS, NORTH-HOLLAND PUBLISHING CO. AMSTERDAM, NL, Bd. 216, Nr. 1-3, 1. Februar 2003 (2003-02-01), Seiten 199-202, XP004404801 ISSN: 0030-4018
- DUDLEY J M ET AL: "Supercontinuum generation in air-silica microstructured fibers with nanosecond and femtosecond pulse pumping" JOURNAL OF THE OPTICAL SOCIETY OF AMERICA B (OPTICAL PHYSICS), APRIL 2002, OPT. SOC. AMERICA, USA, Bd. 19, Nr. 4, Seiten 765-771, XP002255592 ISSN: 0740-3224
- RANKA J K ET AL: "VISIBLE CONTINUUM GENERATION IN AIR-SILICA MICROSTRUCTURE OPTICAL FIBERS WITH ANOMALOUS DISPERSION AT 800 NM" OPTICS LETTERS, OPTICAL SOCIETY OF AMERICA, WASHINGTON, US, Bd. 25, Nr. 1, 1. Januar 2000 (2000-01-01), Seiten 25-27, XP000928530 ISSN: 0146-9592 in der Anmeldung erwähnt

## Beschreibung

Die Erfindung betrifft eine optische Anordnung zur Erzeugung eines Breitbandspektrums, die als breitbandige Strahlungsquelle mit hoher Brillanz u.a. in der Weisslichtinterferometrie (OCT, Kohärenzradar, Spektral Radar) und der Spektroskopie (Pump-Probe-Spektroskopie) eingesetzt werden kann.

Bei solchen Strahlungsquellen treten bekanntermaßen intensive Lichtimpulse durch ein nichtlineares optisches Medium hindurch, so dass es durch nichtlineare optische Prozesse zu einer erheblichen Spektrenverbreiterung kommt und ein sogenanntes Superkontinuum erzeugt wird.

Von den verschiedenen bekannten Medien, in denen derartige Spektrenverbreiterungen vorkommen können, sind in letzter Zeit in zunehmendem Maße sogenannte photonische Fasern (PCF - photonic crystal fiber) zum Interesse für die Fachwelt geworden. Diese Fasern bestehen aus einem Quarzkern, der von einer Reihe mikroskopisch kleiner luft- bzw. gasgefüllter Hohlräume umschlossen ist, die entlang der Faserlänge verlaufen, so dass eine im Faserquerschnitt wabenförmige Faserstruktur entsteht. Durch die Größe und Anordnung der Lochstruktur kann die Strahlung auf ein sehr kleines Gebiet konzentriert werden, was zu den nichtlinearen optischen Prozessen führen kann.

So konnte mehrfach nachgewiesen werden, dass PCFs ideale Medien zur Erzeugung eines Superkontinuums sind. Als vorwiegend unterstützende Prozesse wurden die stimulierte Raman-Streuung, die Selbst- und Kreuzphasenmodulation und die parametrische Vierwellenmischung erkannt. Aber auch Solitoneneffekte, nichtlineare Effekte höherer Ordnung und Dispersion können eine Rolle spielen.

Von besonderem Interesse war zunächst die Kontinuumerzeugung aus Femptosekunden-Laserimpulsen, die ausreichend hohe Feldintensitäten für die Aktivierung der nichtlinearen optischen Prozesse in den verwendeten Fasern besitzen. Untersuchungen wurden z. B. durchgeführt von

Ranka, Windeler, Stentz, "*Visible continuum generation in air-silica microstruture optical fibers with anomalous dispersion* at *800 nm",* Opt. Lett. 25, 25 (2000),

Hartl, Li, Chudoba, Ghanta, Ko, Fujimoto, "*Ultrahighresolution optical coherence tomography using contin uum generation in an air-silica microstructure optical fiber",* Opt. Lett. 26, 608 (2001) und

Holzwarth, Zimmermann, Udem, Hänsch et al., "*White-light frequency comb generation with a diode-pumped Cr:Li SAF laser",* Opt. Lett. 26, 1376 (2001).

In S. Coen, A. H. L. Chan, R. Leonhardt, J. D. Harvey, J. C. Knight, W. J. Wadsworth, P. St. J. Russell, *"White-light supercontinuum generation with 60-ps pump pulses in* a *photonic crystal fiber",* Optics Letters 26 1356 (2001) wurde gezeigt, dass ein beidseitig zur Wellenlänge der Pumpstrahlungsquelle (647 nm) aufgeweitetes Spektrum auch mit ps-Impulsen erzeugt werden kann.

S. Coen et al, "Supercontinuum generation by stimulated Raman scattering and parametric four-wave mixing in photonic crystal fibers", J. Opt. Soc. Am. B, Bd. 19, Nr. 4, April 2003, Seiten 753 - 764 zeigen ferner, dass mit ps-Impulsen eines modengekoppelten Krypton-Ionen-Lasers, an dessen Ausgangswellenlänge von 647nm eine photonische Kristallfaser dispersionsangepasst ist, ein beidseitig zur Ausgangswellenlänge aufgeweitetes Breitbandspektrum erzeugt werden kann, das den gesamten sichtbaren und nahen infraroten Spektralbereich umfasst.

Die WO 01/86347 Al verwendet zur Erzeugung eines Breitbandspektrums bevorzugt einen Titan-Saphir-Laser, der mit einer getaperten optischen Faser gekoppelt ist.

U. Keller et al, Semiconductor Saturable Absorber Mirrors (SESAM's) for Femtosecond to Nonosecond Pulse Generation in Solid-State Lasers, IEEE JOURNAL OF SELECTED TOPICS IN QUANTUM ELECTRONICS, Bd. 2, Nr. 3, 1. September 1996, S. 435 - 451 weist zur Erzeugung von ps-Impulsen auf einen Laser hin, der gemäß K. J. Weingarten et al, "Passivly mode-locked diode-pumped solid-state lasers that use an antiresonant Fabry-Perot saturable absorber", OPTICS LETTERS, Bd. 18, Nr. 8, 15. April 1993, Seiten 640 - 642 einen anisotropen Kristall als aktives Medium (Nd:YLF) besitzt, der von einem asymmetrischen, elliptischen Strahlquerschnitt durchsetzt ist.

Alle bisher bekannten Lösungen zur Erzeugung eines Superkontinuums sind kompliziert im Aufbau und damit groß, wartungs- und kostenintensiv.

Das ist besonders von Nachteil, wenn, wie z. B. für die Weißlichtinterferometrie (OCT, Kohärenzradar, Spektralradar) und die Spektrometrie (Pump-Probe-Spektroskopie), eine kompakte breitbandige Strahlungsquelle mit hoher Brillanz gefordert wird.

Außerdem verlangt ein optimales Signal-Rausch-Verhältnis eine Spektralverteilung des Lichtes, die der spektralen Empfindlichkeit der marktüblichen Halbleiterdetektoren angepasst ist.

Aufgabe der Erfindung ist es deshalb, den Aufwand zur Erzeugung eines Breitbandspektrums zu verringern, indem die dafür notwendige Laserstrahlungsquelle kompakt zu halten und der Wellenlängenbereich des Breitbandspektrums auf einfache Weise dem Empfindlichkeitsbereich der marktüblichen Halbleiterdetektoren anzupassen ist.

Diese Aufgabe wird mit einer optischen Anordnung zur Erzeugung eines Breitbandspektrums nach Anspruch 1 gelöst. Vorteilhafte Weiterbildungen der optischen Anordnung sind in den abhängigen Ansprüchen 2 bis 5 ausgeführt. Bei der optischen Anordnung ist ein passiv modengekoppelter Festkörperlaser zur Bereitstellung von Picosekunden-Impulsen mit einer im Infrarotbereich liegenden Ausgangswellenlänge optisch angepasst und mit einer photonischen Faser gekoppelt, durch deren Dispersionsanpassung an die Ausgangswellenlänge ein im Wesentlichen mit gleichmäßiger Intensität verlaufendes Strahlungsleistungsintervall des Breitbandspektrums in einen Wellenlängenbereich von 700 nm - 1000 nm, unterhalb der Ausgangswellenlänge, gelegt ist.

Obwohl auf eine komplizierte vorherige Frequenzkonversion verzichtet wird, kann das im Wesentlichen mit gleichmäßiger Intensität verlaufende Strahlungsleistungsintervall mit der vorliegenden Erfindung in einen Bereich von 700 nm - 1000 nm gelegt werden.

Der verwendete Picosekunden-Festkörperlaser, der in seinem Aufbau an sich schon wesentlich einfacher und damit auch kostengünstiger ist als die im Stand der Technik für die Erzeugung eines Superkontinuums verwendeten Laser, zeichnet sich im Wesentlichen aber dadurch aus, dass als aktives Medium ein anisotroper Laserkristall dient, der von einem asymmetrischen Pumpstrahl gepumpt ist, dessen Pumpstrahlquerschnitt senkrecht zueinander unterschiedliche Ausdehnungen aufweist und der von einem an diese Asymmetrie angepassten Laserstrahlquerschnitt mit einem Achsverhältnis in senkrecht zueinander verlaufenden Richtungen größer 1 : 1 und kleiner 1 : 3 durchsetzt ist.

Von den kristallographischen Achsen des anisotropen Laserkristalls ist diejenige Achse, in deren Richtung der höchste Wert der Kristallbruchgrenze vorliegt, entlang des größten, in Richtung der geringeren Ausdehnung des Pumpstrahlquerschnitts gelegten Temperaturgradienten ausgerichtet.

Der anisotrope Laserkristall, der einen von dem Pumpstrahl durchsetzten Kristallquerschnitt mit paarweise parallel gegenüberliegenden Kristallkanten von zumindest in einem Teilabschnitt des Laserkristalls unterschiedlicher Kantenlänge enthält, weist seinen größten Wärmeausbreitungskoeffizienten in Richtung der geringeren Ausdehnung des Pumpstrahlquerschnitts und parallel zur Kristallkante mit der geringeren Kantenlänge auf.

Bei teilweiser Beibehaltung einer definierten Asymmetrie zum Erreichen einer hohen Pumpleistungsdichte wird der Laserkristall zur Anpassung des Laserstrahls an diese Asymmetrie in völlig neuer Weise orientiert. Die durch die Reduzierung der Kristallabmessungen in Richtung der geringeren Ausdehnung des Pumpstrahlquerschnittes hervorgerufene Asymmetrie des Wärmeflusses und die daraus resultierende Asymmetrie der thermischen Linse in senkrecht zueinander verlaufenden Richtungen kann derart an den Resonator angepasst werden, dass im Inneren des Kristalls ein asymmetrischer Lasermode realisiert wird, der an den asymmetrischen Pumpmode angepasst ist, ohne dass weitere astigmatische Elemente im Resonator benötigt werden, d.h., ohne dass für die unterschiedlichen Achsen unterschiedliche Strahlformungsmittel eingesetzt werden müssen.

Es konnte außerdem gefunden werden, dass mit den Orientierungsmaßnahmen und der Ausbildung des Laserkristalls besonders günstige thermoelastische Eigenschaften in Form von verbesserten Bruchfestigkeitseigenschaften verbunden sind, wodurch der. Laserkristall zur Aufnahme hoher Pumpleistungsdichten angepasst werden kann. Außerdem sind wesentlich verbesserte Temperaturverhältnisse in der Kristallmitte des anisotropen Laserkristalls zu erreichen. Besonders die Reduzierung der dortigen maximalen Temperatur wirkt sich infolge einer geringeren thermischen Belastung positiv auf eine Erhöhung der Effizienz des Laserüberganges aus.

Die asymmetrische thermische Linse wird dazu benutzt, den elliptischen Laserstrahlquerschnitt mit dem Achsverhältnis größer 1 : 1 und kleiner 1 : 3 zu erzeugen. Mit Hilfe einer brewstergeschnittenen Strahlaustrittsfläche des Laserkristalls kann dieses Achsverhältnis noch um den Faktor des Verhältnisses des Brechungsindex des Laserkristalls zum Brechnungsindex der Luft vergrößert werden.

Mit der Erfindung wird eine kostengünstige, kompakte und für viele Zwecke anwendbare Breitbandstrahlungsquelle bereitgestellt, die sich durch einen einfach aufgebauten und effizient arbeitenden Laser auszeichnet. Durch die Verwendung des speziell an die Ausgangswellenlänge angepassten Frequenzkonversionselementes kann eine signifikante Verbreiterung der Laserbandbreite mit einem im Wesentlichen mit gleichmäßiger Intensität verlaufenden Hauptanteil im Bereich zwischen 700 nm und 1000 nm erzielt werden, obwohl die Ausgangswellenlänge mit 1064 nm langwelliger ist.

Die Erfindung soll nachstehend anhand der schematischen Zeichnung näher erläutert werden. Es zeigen:
- Fig. 1: eine optische Anordnung für eine kompakte Picosekunden-Breitbandstrahlungsquelle
- Fig. 2: ein Supercontinuum-Spektrum der Picosekunden-Breitbandstrahlungsquelle gemäß Fig. 1
- Fig. 3: eine Pumpanordnung für einen modengekoppelten Festkörperlaser
- Fig. 4: die Achsenorientierung im anisotropen Laserkristall

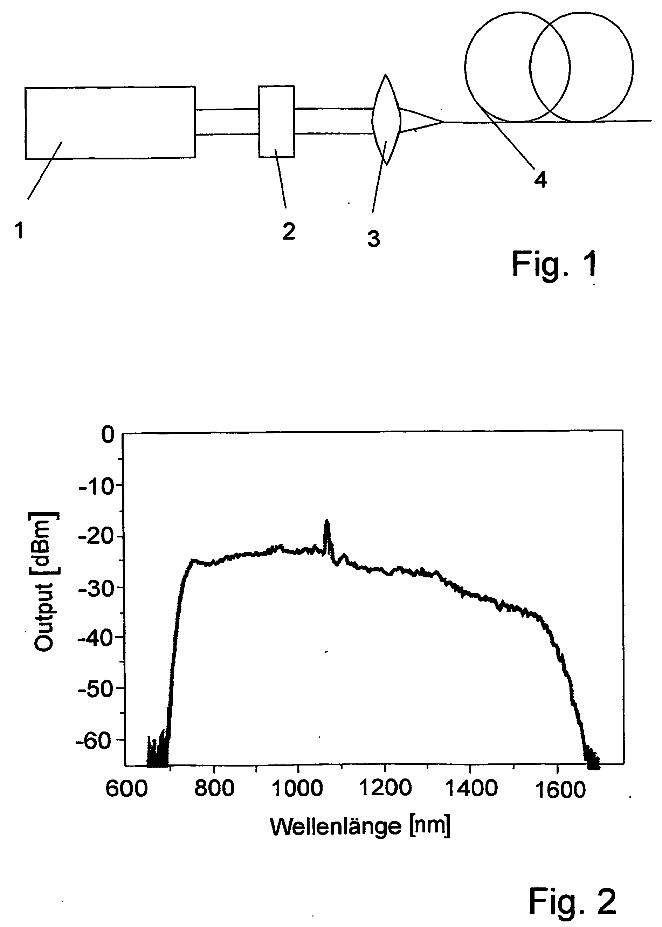

Die Breitbandstrahlungsquelle gemäß Fig. 1 besteht aus einem passiv modengekoppelten Festkörperlaser 1, der einen, mit sättigbaren Halbleiterabsorbern arbeitenden modengekoppelten Resonator mit drei Umlenkspiegeln und einem Endspiegel umfasst und von einem optischen Isolator 2 vor Rückkopplungen geschützt, über eine Einkoppeloptik 3 mit einem Frequenzkonversionselement in Form einer photonischen Faser 4 gekoppelt ist.

Der Festkörperlaser 1, der eine durchschnittliche Ausgangsleistung von 6 W aufweist, liefert Laserpulse bei einer Ausgangswellenlänge im Infrarotbereich von λ = 1064 nm und Pulsdauern von 8,5 ps, deren spektrale Bandbreite 0,27 nm beträgt. Das vorliegende Ausführungsbeispiel arbeitet weiterhin mit einer Pulswiederholrate von 120 MHz, einer mittleren Pulsenergie von 50 nJ und einer mittleren Pulsspitzenleistung von 5,8 kW. Die Ausgangsstrahlung ist horizontal linear polarisiert und die Strahlqualität beträgt M² = 1.

Der für die Ausgangswellenlänge spezifizierte optische Isolator 2 verhindert als optische Diode, dass rückreflektierte oder -gestreute Strahlung aus der Einkoppeloptik 3 und der photonischen Faser 4 in den Resonator des Festkörperlasers 1 rückgekoppelt wird, was zu einer empfindlichen Störung des Modenkopplungsbetriebes führen würde.

Mit der Einkoppeloptik 3, für die eine asphärische Glas-Linse mit einer Brennweite von f = 4,5 mm, einer numerischen Apertur von NA = 0,55 und einer Antireflexbeschichtung verwendet wird, wird durch eine Strahlfokussierung eine bestmögliche Anpassung der Freistrahlparameter (Strahlradius und Öffnungswinkel des Gaußschen Strahls, TEM₀₀ des Festkörperlasers 1) an die Parameter der Fasermoden und somit eine maximale Leistungseinkopplung in die photonische Faser 4 erzielt (maximale Einkoppeleffizienz 49,6 %). Auf diese Weise lässt sich die Anregung bestimmter Fasermoden mit niedriger Ordnung erreichen.

Die fünf Meter lange photonische Faser 4 mit einem Kerndurchmesser von 5 µm, einer numerische Apertur von NA = 0,21 ist dispersionsangepasst für die Ausgangswellenlänge und dient der spektralen Verbreiterung der spektralen Bandbreite der Laserpulse, wobei diese durch verschiedenste optisch nichtlineare Effekte mit unterschiedlich starker Ausprägung erreicht wird, z. B. durch stimulierte Ramanstreuung, Selbst- und Kreuzphasenmodulation, parametrische Vierwellenmischung, Solitoneneffekte und Dispersion sowie nichtlineare Effekte höherer Ordnung. Insbesondere ist die Faser 4 derart an die Ausgangswellenlänge angepasst, dass die monochromatische Infrarot-Laserstrahlung von 1064 nm in eine spektral breitbandige Strahlung auch im kürzerwelligen NIR-VIS-Bereich umgewandelt wird, also einen Bereich, in dem Halbleiterdetektorelemente ihren Empfindlichkeitsbereich besitzen.

Wie aus Fig. 2 zu entnehmen ist, wird mit der erfindungsgemäßen Anordnung ein Breitbandspektrum generiert, bei dem ein über 40 % der Strahlungsleistung umfassendes Strahlungsleistungsintervall in einen Bereich von 700 nm - 1000 nm gelegt ist. Von besonderer Bedeutung für die vorgesehenen Anwendungsbereiche ist der im Wesentlichen gleichmäßige Intensitätsverlauf in dem großen Wellenlängenbereich unterhalb der Ausgangswellenlänge, wogegen oberhalb ein Abfall der Leistung zu verzeichnen ist.

Im Gegensatz zu den Lösungen des Standes der Technik weist die zur Bereitstellung dieses Spektrum dienende Breitbandstrahlungsquelle einen besonders einfachen und belastungsfähigen Aufbau auf, insbesondere was den Festköperlaser 1 anbetrifft. Dieser wird direkt von einem Diodenlaser gepumpt, wobei eine Pumpanordnung vorgesehen ist, die eine besonders hohe Pumpleistungsdichte zulässt, ohne den Laserkristall zu zerstören.

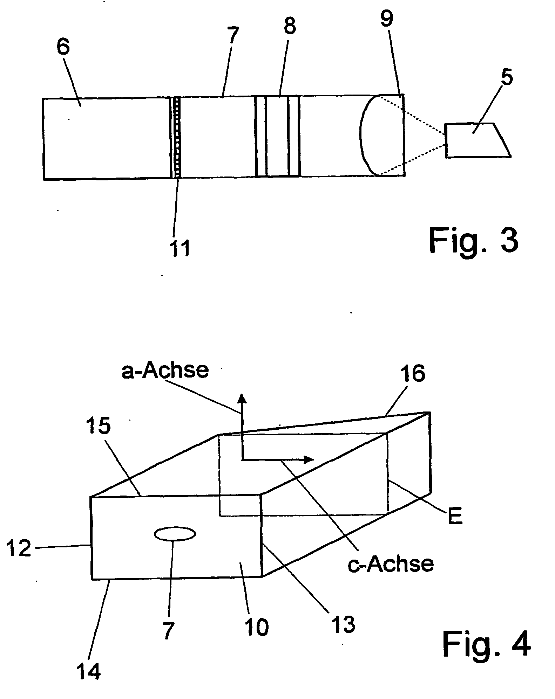

Die in Fig. 3 dargestellte Pumpanordnung enthält zum Endpumpen eines Laserkristalls 5 eine Pumpstrahlungsquelle 6 in Form eines Laserdiodenbarrens oder einer Anordnung davon, deren Pumpstrahl 7 mittels zweier Zylinderlinsen 8 und 9 fokussiert auf eine Strahleintrittsfläche 10 des Laserkristalls 5 gerichtet ist. Der Pumpstrahl 7 weist beim Eintritt in den Laserkristall 5 eine Asymmetrie seines Querschnittes mit senkrecht zueinander unterschiedlichen Ausdehnungen auf.

Zum Erreichen einer hohen Pumpstrahldichte hat es sich zur Verbesserung der Strahleigenschaften des Laserdiodenbarrens vorteilhaft erwiesen, zusätzlich zur Kollimation der Fast-Axis auch die Slow-Axis in besonderer Weise zu kollimieren. Die in dem Laserdiodenbarren zeilenförmig angeordneten Einzelemitter beanspruchen üblicherweise nur einen Teil des zur Verfügung stehenden Platzes. Der andere Teil wird von Zwischenräumen, den sogenannten "spacings" eingenommen, die das Strahlparameterprodukt verschlechtern, da sich die abstrahlende Fläche um den nicht ausgenutzten Platz des Zwischenraumes vergrößert. Eine Anordnung von Kollimationslinsen in der Ebene der Überschneidung der Laserstrahlenbündel eliminiert das Todverhältnis, wodurch eine Verbesserung des Strahlparameterprodukts etwa um den Faktor 2 erreicht werden kann. Die dafür vorgesehene Mikrooptik 11 ist der Pumpstrahlungsquelle 2 zu diesem Zweck nachgeordnet.

Der anisotrope Laserkristall 5, für den im vorliegenden Beispiel ein Nd:YVO₄-Kristall von 4 x 2 x 6, 9 mm³ Größe verwendet wird, ist gemäß Fig. 4 derart zum Pumpstrahl orientiert, dass seine kristallographische c-Achse in Richtung der größeren Ausdehnung (parallel zur Slow-axis) und die kristallographische a-Achse, in deren Richtung der höchste Wert der Kristallbruchgrenze und des Wärmeausbreitungskoeffizienten vorliegt, in Richtung der geringeren Ausdehnung des Pumpstrahlquerschnitts (parallel zur Fast-axis) gerichtet sind.

Wird zusätzlich die Kristallhöhe in Richtung der a-Achse erniedrigt und somit der Temperaturgradient weiter vergrößert, so hat sich gezeigt, dass damit eine erhebliche Erhöhung der Kristallfestigkeit gegenüber einer thermischen Beanspruchung resultiert. Das bedeutet, dass der Laserkristall 5 bei wesentlich höheren Pumpleistungen und Pumpleistungsdichten betrieben werden kann.

Der Laserkristall 5 weist aus diesem Grund einen von dem Pumpstrahl 7 durchsetzten Kristallquerschnitt mit paarweise parallel gegenüberliegenden Kristallkanten 12, 13, 14 und 15 von unterschiedlicher Kantenlänge auf, wobei die Kristallkanten 12 und 13 gegenüber den Kristallkanten 14 und 15 eine geringere Kantenlänge aufweisen und in Richtung der geringeren Ausdehnung des Pumpstrahlquerschnitts verlaufen.

Das bevorzugte Kantenverhältnis liegt in einem brewstergeschnittenen Laserkristall selbstverständlich nur in einem Teilabschnitt vor, der bei der Strahleintrittsfläche 10 beginnt und bei einer Ebene E endet, nach der die als Strahlaustrittsfläche dienende, gegen den Resonatorstrahl geneigte Brewsterfläche 16 die Querschnittsfläche verringert und damit auch das Kantenverhältnis verändert.
Der mit Hilfe der asymmetrischen thermischen Linse und durch den Brewsterschnitt des Laserkristalls 1 erzeugte elliptische Modenquerschnitt des Laserstrahls weist so ein Achsenverhältnis von 1 : 2 bis 1 : 3 auf.

## Patentansprüche

1. Optische Anordnung zur Erzeugung eines Breitbandspektrums, bei der ein passiv modengekoppelter Festkörperlaser (1) zur Bereitstellung von Picosekunden-Impulsen mit einer im Infrarotbereich liegenden Ausgangswellenlänge optisch angepasst mit einer photonischen Faser (4) gekoppelt ist, durch deren Dispersionsanpassung an die Ausgangswellenlänge ein Strahlungsleistungsintervall des Breitbandspektrums in einen Wellenlängenbereich von 700 nm - 1000 nm, unterhalb der Ausgangswellenlänge, gelegt ist, wobei der Festkörperlaser (1) als aktives Medium einen anisotropen Laserkristall (5) enthält, der von einem asymmetrischen Pumpstrahl (7) gepumpt ist, dessen Pumpstrahlquerschnitt senkrecht zueinander unterschiedliche Ausdehnungen aufweist, und wobei von den kristallographischen Achsen des anisotropen Laserkristalls (5) diejenige Achse, in deren Richtung der höchste Wert der Kristallbruchgrenze vorliegt, entlang des größten, in Richtung der geringeren Ausdehnung des Pumpstrahlquerschnitts gelegten, Temperaturgradienten ausgerichtet ist.

2. Optische Anordnung nach Anspruch 1, **dadurch gekennzeichnet, dass** der anisotrope Laserkristall (5) einem an die Asymmetrie des Pumpstrahls (7) angepassten Laserstrahlquerschnitt mit einem Achsverhältnis in senkrecht zueinander verlaufenden Richtungen größer 1 : 1 und kleiner 1 : 3 durchsetzt ist.

3. Optische Anordnung nach Anspruch 2, **dadurch gekennzeichnet, dass** der anisotrope Laserkristall (5), der einen von dem Pumpstrahl (7) durchsetzten Kristallquerschnitt mit paarweise parallel gegenüberliegenden Kristallkanten (12, 13, 14, 15) von zumindest in einem Teilabschnitt des Laserkristalls (5) unterschiedlicher Kantenlänge enthält, seinen größten Wärmeausbreitungskoeffizienten in Richtung der geringeren Ausdehnung des Pumpstrahlquerschnitts und parallel zur Kristallkante (12, 13) mit der geringeren Kantenlänge aufweist.

4. Optische Anordnung nach Anspruch 3, **dadurch gekennzeichnet, dass** in dem Laserkristall (5) eine asymmetrische thermische Linse mit unterschiedlicher Stärke in senkrecht zueinander verlaufenden Richtungen ausgebildet ist, wobei die Stärke der thermischen Linse der Größe der Ausdehnung des Pumpstrahlquerschnitts angepasst ist.

5. Optische Anordnung nach Anspruch 4, **dadurch gekennzeichnet, dass** das Achsverhältnis in dem Laserstrahlquerschnitt durch die richtungsabhängigen Unterschiede in den Stärken der thermischen Linse bestimmt ist.

## Claims

1. An optical assembly for generating a broad-band spectrum, wherein a passively mode-coupled solid state laser (1) is coupled, in an optically adapted manner, with a photonic fiber (4) so as to provide picosecond pulses with an output wavelength located in the infrared range, the dispersion adjustment of said photonic fiber (4) to said output wavelength placing a radiation power interval of the broad-band spectrum in a wavelength range situated 700 nm - 1000 nm below said output wavelength, wherein the solid state laser (1) contains an anisotropic laser crystal (5) as an active medium, said anisotropic laser crystal (5) being pumped by an asymmetrical pump beam (7) whose pump beam cross-section has different mutually orthogonal expansions, and wherein, among the crystallographic axes of said anisotropic laser crystal (5), that axis in whose direction the highest value of the crystal fracture limit is present is aligned along the greatest temperature gradient located in the direction of the smaller expansion of the pump beam cross-section.

2. Optical assembly according to claim 1, **characterised in that** the anisotropic laser crystal (5) is traversed by a laser beam cross-section adapted to the asymmetry of the pump beam (7) and having an axial ratio in mutually orthogonal directions of greater than 1:1 and less than 1:3.

3. Optical assembly according to claim 2, **characterised in that** the anisotropic laser crystal (5), which contains a crystal cross-section traversed by the pump beam (7) and having crystal edges (12, 13, 14, 15), which are arranged in pairs opposite each other and have different edge lengths at least in a partial section of the laser crystal (5), has its greatest thermal expansion coefficient in the direction of the smaller expansion of the pump beam cross-section and parallel to the crystal edge (12, 13) having the shorter edge length.

4. Optical assembly according to claim 3, **characterised in that** an asymmetrical thermal lens having different strengths in mutually orthogonal directions is formed in the laser crystal (5), the strength of said thermal lens being adapted to the size of the expansion of the pump beam cross-section.

5. Optical assembly according to claim 4, **characterised in that** the axial ratio in the laser beam cross-section is determined by the direction-dependent differences in the strengths of the thermal lens.

## Revendications

1. Ensemble optique destine à générer un spectre à large bande, ensemble dans lequel un laser solide (1), à couplage de modes passif, est couplé de manière optiquement adaptée avec une fibre photonique (4) afin de fournir des impulsions picosecondes présentant une longueur d'onde de sortie qui est située dans l'infrarouge, l'ajustement de dispersion de ladite fibre photonique (4), à la longueur d'onde de sortie, mettant un intervalle de puissance radiante du spectre à large bande dans une gamme de longueurs d'onde qui se trouve 700 nm -1000 nm au-dessous de ladite longueur d'onde de sortie, ledit laser solide (1) contenant un cristal laser anisotropique (5) en tel que medium actif, qui est pompé par un faisceau de pompe (7) asymétrique, dont la section transversale du faisceau de pompe présente différentes expansions, qui sont orthogonales les unes par rapport aux autres, et l'axe des axes cristallographiques dudit cristal laser anisotropique (5) dans la direction de laquelle existe la plus grande valeur pour la limite de rupture étant orientée selon le plus grand gradient de temperature dans la direction de l'expansion plus petite de la section transversale de faisceau de pompe.

2. Ensemble optique selon la revendication 1, **caractérisé en ce que** le cristal laser anisotropique (5) est traversé d'une section transversale de faisceau laser, qui est adaptée à l'asymétrie du faisceau de pompe (7) et qui présente un rapport axial de plus de 1:1 et de moins de 1:3, dans des directions orthogonales les unes par rapport aux autres.

3. Ensemble optique selon la revendication 2, **caractérisé en ce que** le cristal laser anisotropique (5) qui contient une section transversale de cristal traversée par le faisceau de pompe (7) et présentant des bords du cristal (12, 13, 14, 15), qui sont arrangés en paires opposées et qui présentent des longueurs de bord différentes, au moins dans une section partielle du laser cristal (5), présente son coéfficient d'expansion thermique maximum dans la direction de l'expansion plus petite de la section transversale de faisceau de pompe et en parallèle avec le bord du cristal (12, 13) qui présente une longueur de bord plus courte.

4. Ensemble optique selon la revendication 3, **caractérisé en ce qu'**une lentille thermique asymétrique, présentant différentes puissances dans des directions orthogonales les unes par rapport aux autres, est formée dans ledit laser cristal (5), la puissance de ladite lentille thermique étant adaptée à la dimension de l'expansion de la section transversale de faisceau de pompe.

5. Ensemble optique selon la revendication 4, **caractérisé en ce que** le rapport axial dans la section transversale de faisceau laser est déterminé par les différences entre les puissances de ladite lentille thermique, ces différences étant fonction de la direction.
